# EUROPÄISCHE PATENTSCHRIFT

(11) **EP 2 484 560 B1**
(45) Veröffentlichungstag und Bekanntmachung des Hinweises auf die Patenterteilung: **08.04.2015**
(21) Anmeldenummer: 12153750.0
(22) Anmeldetag: 03.02.2012
(51) Int. Cl.: B60R 15/04

(54) **Toilette für Fahrzeuge, insbesondere für Busse, Reisemobile, Caravans und Yachten**
Toilet for vehicles, particularly for buses, camper vans, caravans and yachts
Toilette pour véhicules, notamment pour bus, camping-cars, caravanes et yachts

(30) Priorität: 03.02.2011 DE 102011010303
(43) Veröffentlichungstag der Anmeldung: 08.08.2012
(73) Patentinhaber: Dometic GmbH, 57074 Siegen (DE)
(72) Erfinder: Wunderlich, Frank, 57250 Netphen (DE); Jochim, Tim, 57234 Wilnsdorf (DE)
(74) Vertreter: Grosse, Felix Christopher

(56) Entgegenhaltungen:
- EP-A1- 2 572 940
- DE-C1- 4 116 486
- DE-U1-202009 002 924
- US-B1- 6 189 161

## Beschreibung

Die Erfindung betrifft eine Toilette für Fahrzeuge, insbesondere für Busse, Reisemobile, Caravans und Yachten, die ein Oberteil mit einer Toilettenschüssel und ein Trägerteil mit einem Kassettenschacht aufweist, wobei eine Kassette in den Kassettenschacht einschiebbar ist.

In DE 4116486 C1 ist eine Toilette nach dem Oberbegriff von Anspruch 1 beschrieben.

Derartige Toiletten sind im Stand der Technik unter anderem als Kassettentoiletten bekannt. Diese werden in Fahrzeuge in vielfältigen Formen eingebaut. Das Trägerteil ist dabei in der Regel an den Fahrzeugen befestigt und trägt die Toilettenschüssel. In dem Trägerteil ist ein Kassettenschacht angeordnet, in dem eine Kassette einschiebbar ist. Die Kassette wird auch als Fäkalientank bezeichnet. In der Regel ist dazu eine Klappe in der Außenwand des Fahrzeugs vorgesehen, so dass die Kassette von der Außenseite aus dem Fahrzeug entnehmbar bzw. einschiebbar ist. Die Kassette weist einen Einlass auf, durch den Flüssigkeiten und Fäkalien von der Toilettenschüssel in die Kassette eingeleitet werden können. Der Einlass ist durch eine oder mehrere Einlassabdeckungen abgedichtet und somit flüssigkeitsdicht und geruchsdicht verschlossen. Zum Teil sind bei bekannten Toiletten im Trägerteil oder in der Toilettenschüssel Vorrichtungen vorgesehen, um die Einlassabdeckungen beim Einschieben der Kassette in den Kassettenschacht zu verlagern und den Einlass zur Einleitung von Fäkalien und Flüssigkeiten zu öffnen.

Als nachteilig an den bekannten Toiletten hat sich herausgestellt, dass die Toilettenschüssel an ihrem Auslass nicht abgedichtet ist, wenn die Kassette aus dem Kassettenschacht herausgezogen ist. Wird die Toilette in diesem Zustand benutzt bzw. beinhaltet die Toilettenschüssel noch Restflüssigkeiten z.B. aus einem Spülkanal, fallen die Exkremente bzw. Flüssigkeiten durch den Auslass der Toilettenschüssel in den Kassettenschacht oder auf einen darunter liegenden Fahrzeugboden, der oftmals aus Holz ist. Die Verunreinigungen müssen dann mühsam wieder entfernt werden. Durch die Verunreinigungen kann es auch zu Beschädigungen des Fahrzeuges kommen. Ferner besteht eine erhebliche Verletzungsgefahr, wenn die Toilettenschüssel gereinigt wird und dabei ein Finger durch den Toüettenschüsselauslass gesteckt wird und zeitgleich die Kassette eingeschoben wird. Hierbei kann es im Extremfall zur Abscherung von Körperteilen kommen.

Die Aufgabe der Erfindung liegt daher ausgehend vom Stand der Technik darin, eine Toilette für Fahrzeuge bereitzustellen, bei der Flüssigkeiten und Feststoffe nur dann aus der Toilettenschüssel abfließen können, wenn sich eine Kassette im eingeschobenen Zustand befindet.

Diese Aufgabe wird durch eine Toilette für Fahrzeuge mit den Merkmalen von Anspruch 1 gelöst. Vorteilhafte Ausführungsformen der Toilette gehen aus den Ansprüchen 2 bis 14 hervor.

Die Toilette für Fahrzeuge, insbesondere für Busse, Reisemobile, Caravans oder Yachten weist, wie oben ausgeführt, ein Oberteil mit einer Toilettenschüssel und ein Trägerteil mit einem Kassettenschacht auf. In den Kassettenschacht ist eine Kassette einschiebbar. Erfindungsgemäß ist zwischen der Toilettenschüssel und der sich im eingeschobenen Zustand befindlichen Kassette ein Durchleitteil angeordnet. Das Durchleitteil ist durch einen Durchleitteilverschluss verschließbar. Der Durchleitteilverschluss weist einen Sperrmechanismus auf. Dieser Sperrmechanismus ist mit der Kassette koppelbar.

Der besondere Vorteil der erfindungsgemäßen Vorrichtung ist, dass zusätzlich zu einer bekannten Einlassabdeckung, auch als Verschlussschieber bezeichnet, an der Kassette zwischen der Toilettenschüssel und der Kassette ein Durchleitteilverschluss angeordnet ist. Mithin wird ein Doppelverschluss bereitgestellt, der aus dem Durchleitteilverschluss und der Einlassabdeckung besteht. Durch den Durchleitteilverschluss kann das Abfließen von Flüssigkeiten und Feststoffen aus der Toilettenschüssel unterbunden werden. Durch den Sperrmechanismus ist der Durchleitteilverschluss zudem sperrbar, so dass er im gesperrten Zustand nicht öffenbar oder schließbar ist zum Beispiel, wenn sich die Kassette nicht im eingeschobenen Zustand befindet. Durch den Durchleitteilverschluss kann zudem wirksam verhindert werden, dass etwas durch den Toilettenschüsselauslass gesteckt, transportiert oder befördert wird, wenn die Kassette ausgezogen ist. Dadurch wird möglichen Verunreinigungen, Beschädigungen und/oder Verletzungen vorgebeugt, falls noch etwas durch den Toilettenschüsselauslass gesteckt sein sollte, während die Kassette eingeschoben wird.

Vorzugsweise ist der Sperrmechanismus derart ausgebildet, dass der Durchleitteilverschluss nur dann aus einer Schließstellung bewegbar ist, wenn sich die Kassette im eingeschobenen Zustand befindet. Hierzu kann der Sperrmechanismus einen Sperrbolzen aufweisen, der durch die Kassette derart verlagerbar ist, dass eine Bewegung des Durchleitteilverschlusses verhindert wird.

Erfindungsgemäß ist der Sperrmechanismus derart ausgebildet, dass die Kassette im eingeschobenen Zustand fixiert ist, wenn der Durchleitteilverschluss außerhalb der Schließstellung ist. Auch hierzu kann ein Sperrbolzen verwendet werden, um in die Kassette formschlüssig einzugreifen und eine Verlagerung zu unterbinden, solange der Durchleitteilverschluss geöffnet ist.

In einer Ausführungsform ist eine Einlassabdeckung an der Kassette durch Einschieben der Kassette in den Kassettenschacht automatisch öffenbar und durch Herausziehen der Kassette aus dem Kassettenschacht verschließbar.

Zweckmäßigerweise umfasst der Durchleitteilverschluss ein Schieberschwert und einen Schiebergriff. Der Schiebergriff ist dabei vorzugsweise so angeordnet, dass er von einer die Toilette benutzenden Person betätigt werden kann, so dass das Schieberschwert vor dem Toilettengang aus der Schließstellung in eine Offenstellung überführt und anschließend wieder zurückgeschoben werden kann. Grundsätzlich ist auch eine Automatisierung dieses Vorgangs denkbar. Wenn die Toilettenschüssel schwenkbar ist, verschwenkt der Schiebergriff vorzugsweise zusammen mit der Toilettenschüssel.

Vorteilhaft ist es, wenn das Durchleitteil gegenüber dem in der Schließstellung befindlichen Schieberschwert durch eine Dichtung abgedichtet ist. Vorzugsweise kommen zwei Dichtungen zum Einsatz, die ober- und unterhalb des Schieberschwerts angeordnet sind. Sie können beispielsweise als Ringdichtungen ausgebildet sein. Durch die Dichtung ist sichergestellt, dass Flüssigkeiten und Fäkalien nicht aus dem Durchleitteil seitlich im Bereich des Schieberschwerts austreten können.

Weiterhin kann das Durchleitteil ein Schieberschwertgehäuse aufweisen. Durch das Schieberschwertgehäuse ist das Schieberschwert in jeder Stellung vom Durchleitteil bzw. dem Schieberschwertgehäuse umgeben. Somit können Verschmutzungen des Schieberschwertes, welche die Dichtungen zwischen Durchleitteil und Schieberschwert passiert haben, nicht nach außen gelangen.

Alternativ kann der Durchleitteilverschluss eine Klappe umfassen, wobei die Klappe vorzugsweise abschnittsweise sphärisch (kugelförmig) geformt ist. Eine solche Klappe wird auch als Kugelverschluss bezeichnet. Die Klappe kann dann durch einen Griff mit einer Schwenkbewegung verlagert werden, an Stelle einer Schiebebewegung.

Die Toilettenschüssel und das Durchleitteil sind vorzugsweise ein einstückiges Bauteil. Mithin kann das Durchleitteil an die Toilettenschüssel angeformt sein. Somit ist die Anzahl der Bauteile der Toilette reduziert und die Montage vereinfacht.

Vorzugsweise ist an dem Durchleitteil ein Kassettenadapter angeordnet. Auf diese Weise ist der Übergang zur Kassette anpassbar. Beispielsweise ist es möglich, unterschiedliche Kassettenadapter zur Anpassung an verschiedene Kassettentypen am Durchleitteil zu befestigen.

Besonders vorteilhaft ist es, wenn der Kassettenadapter verschiebbar am Durchleitteil angeordnet ist und zwischen dem Kassettenadapter und dem Durchleitteil eine Dichtung vorgesehen ist. Auf diese Art und Weise kann ein Abstand. z.B. aufgrund von Fertigungs- oder Herstelltoleranzen, zwischen der Kassette und dem Durchleitteil einstellbar überbrückt werden. Durch verschiebbare Anordnung des Kassettenadapters, können sogar Höhenunterschiede zwischen unterschiedlichen Kassetten ausgeglichen werden, die nacheinander in den Kassettenschacht eingeschoben werden. Weiterhin kann der Abstand zwischen einer höhenverstellbaren Toilettenschüssel und der Kassette auf diese Weise einstellbar überbrückt werden.

In einer bevorzugten Ausführungsform weist der Kassettenadapter einen Mitnehmer für eine verschiebbare Einlassabdeckung der Kassette auf. Der Mitnehmer ist so ausgebildet, dass er in die Einlassabdichtung eingreift, wenn die Kassette in den Kassettenschacht eingeschoben wird. Auf diese Weise wird die Einsatzabdeckung ortsfest gehalten, wenn die Kassette vollständig in den Kassettenschacht eingeschoben wird. Mithin wird die Einlassdeckung während des Einschubs der Kassette von der Einlassöffnung weggeschoben.

Vorzugsweise ist der Mitnehmer durch eine Rückholfeder beaufschlagt. Die Rückholfeder stellt sicher, dass der Mitnehmer in eine Ausgangsstellung zurückgezogen ist, wenn die Kassette aus dem Kassettenschacht herausgezogen ist. Die Rückholfeder kann Teil eines Rückholmechanismus sein. Der Rückholmechanismus kann einen Rückholarm aufweisen. Die Rückholfeder kann auch als Rückholarm ausgebildet sein.

Besonders vorteilhaft ist es, wenn im eingeschobenen Zustand der Kassette das Durchleitteil und eine Einlassöffnung der Kassette fluchten. Mithin ist sichergestellt, dass die Fäkalien und die Flüssigkeiten von der Toilettenschüssel direkt in die Kassette gelangen, ohne zwischenzeitlich austreten zu können.

Das Oberteil kann schwenkbar am Trägerteil, oder einem ähnlichen Bauteil, befestigt sein. Durch die schwenkbare Befestigung kann unterschiedlichen baulichen Gegebenheiten im Fahrzeug Rechnung getragen werden. So ist es zum Beispiel möglich, in einer engen Nasszelle eine erfindungsgemäße Toilette anzuordnen und die Toilettenschüssel aus dem Weg schwenken, wenn die Nasszelle beispielsweise als Dusche benutzt werden soll.

Gemäß einer weiteren Ausführungsform kann die Kassette in den Kassettenschacht eingeschoben sein.

Die Erfindung ist nachfolgend anhand von einem in der Figur dargestellten Ausführungsbeispiel näher erläutert. Es zeigen:
- Fig. 1 und 2: eine vereinfacht dargestellte erfindungsgemäße Toilette im Querschnitt und einer Seitenansicht;
- Fig. 3: die Toilette von Fig. 1, wobei der Durchleitteilverschluss vergrößert im Querschnitt und im Detail dargestellt ist;
- Fig. 4 bis 6: den Sperrmechanismus im Querschnitt;
- Fig. 7 und 8: die Toilette von Fig. 1 nach dem Ausziehen der Kassette;
- Fig. 9 und 10: die Toilette von Fig. 1, wobei der Durchleitteilverschluss in der Schließstellung gezeigt ist;
- Fig. 11 und 12: die Toilette von Fig. 1, wobei der Durchleitteilverschluss und die Einlassabdeckung der Kassette geöffnet sind.

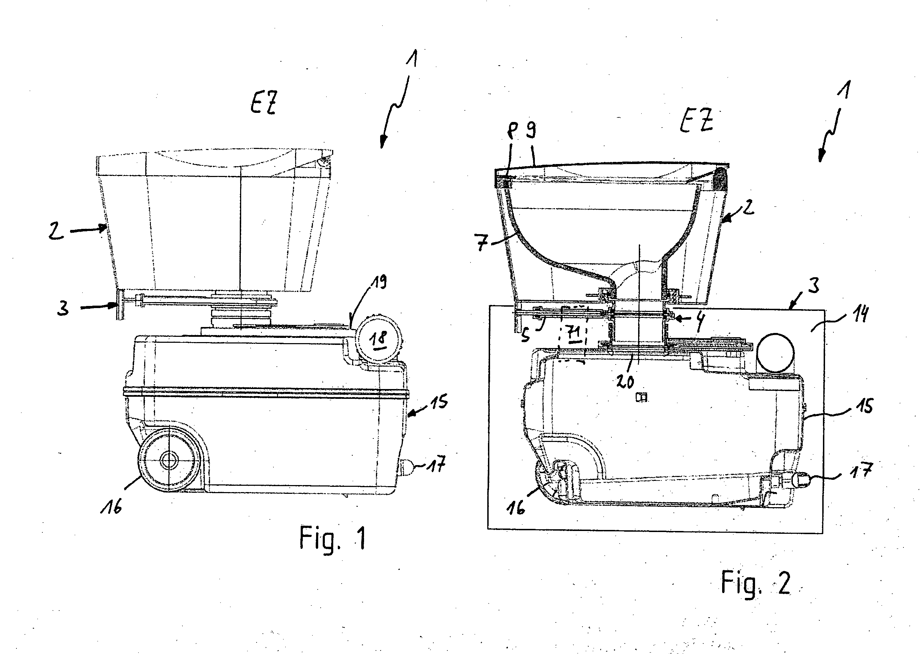

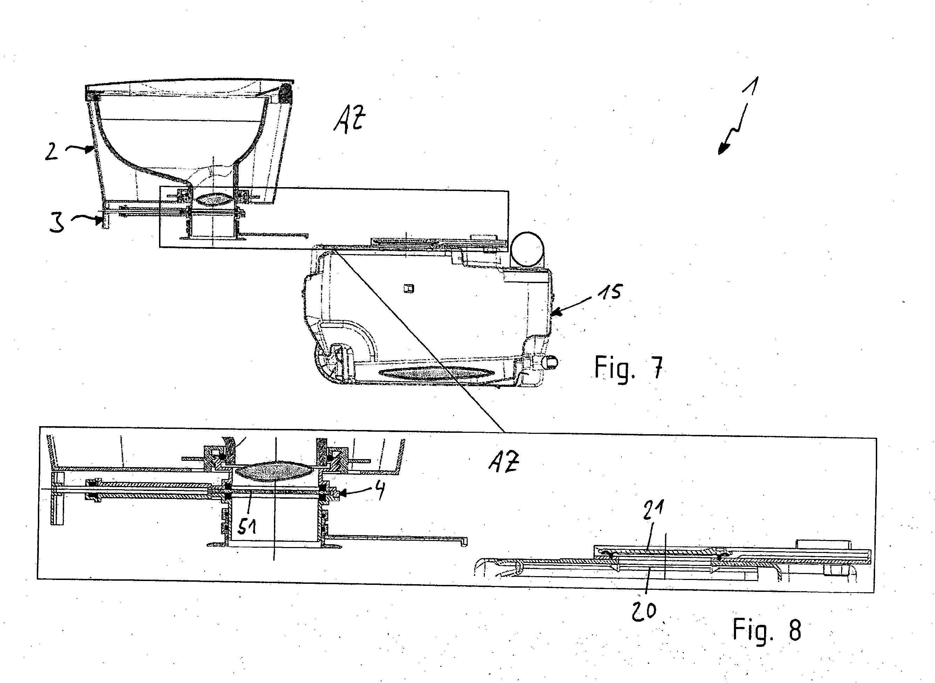

In den Figuren 1 bis 12 ist die erfindungsgemäße Toilette 1 für Fahrzeuge, insbesondere für Busse, Reisemobile, Caravans und Yachten, jeweils ausschnittsweise gezeigt. Die Toilette 1 weist ein Oberteil 2 und ein Trägerteil 3 auf, wobei vom Trägerteil 3 nur das Durchleitteil 4 mit dem Durchleitteilverschluss 5 dargestellt ist. Das Oberteil 2 umfasst ein Gehäuse 6, in dem eine Toilettenschüssel 7 angeordnet ist. Am Oberteil 2 sind eine Toilettenbrille 8 und ein Toilettendeckel 9 schwenkbar befestigt. Die Toilettenschüssel 7 weist an einem unteren Ende 10 einen Toilettenschüsselauslass 11 auf. Im Bereich des Toilettenschüsselauslasses 11 ist das Oberteil 2 am Trägerteil 3 über ein Gewinde 12 schwenkbar und höhenverstellbar gelagert. Zwischen dem Trägerteil 3 und dem Toilettenschüsselauslass 11 ist eine Ringdichtung 13 vorgesehen. Das Trägerteil 3 umfasst das Durchleitteil 4 und einen Kassettenschacht 14, in den eine Kassette 15 einschiebbar ist. In den Fig. 1 bis 4 und 9 bis 12 ist die Kassette 15 jeweils im vollständig eingeschobenen Zustand EZ gezeigt. In den Fig. 7 und 8 ist die Kassette 15 in einem ausgezogenen Zustand AZ dargestellt. Die Kassette 15 ist ein Aufbewahrungstank für Flüssigkeiten und Fäkalien. Zwecks Geruchsvermeidung können chemische Zusätze in die Kassette 15 eingefüllt sein. Um den Transport der Kassette 15 zu einer Entleerungsstation zu erleichtern, ist die Kassette 15 mit zwei Rädern 16 und einem teleskopartig ausziehbaren Griff 17 versehen. Oberhalb des Griffs 17 ist ein Entleerungsstutzen 18 angeordnet. Die Kassette 15 weist auf einer Oberseite 19 eine Einlassöffnung 20 auf. Die Einlassöffnung 20 ist durch eine horizontal verschiebbare Einlassabdeckung 21 verschließbar. An der Einlassöffnung 20 ist eine Kassettendichtung 22 vorgesehen, die zwei bogenförmig nach innen und außen kragende Dichtlippen 23; 24 aufweist. Durch die Kassettendichtung 22 ist die Einlassöffnung 20 bei aufliegender Einlassabdeckung 21 flüssigkeitsdicht und geruchsdicht verschlossen. Ist die Kassette 15 in den Kassettenschacht 14 eingeschoben, dichtet die Kassettendichtung 22 den Übergang zum Durchleitteil 4 ab.

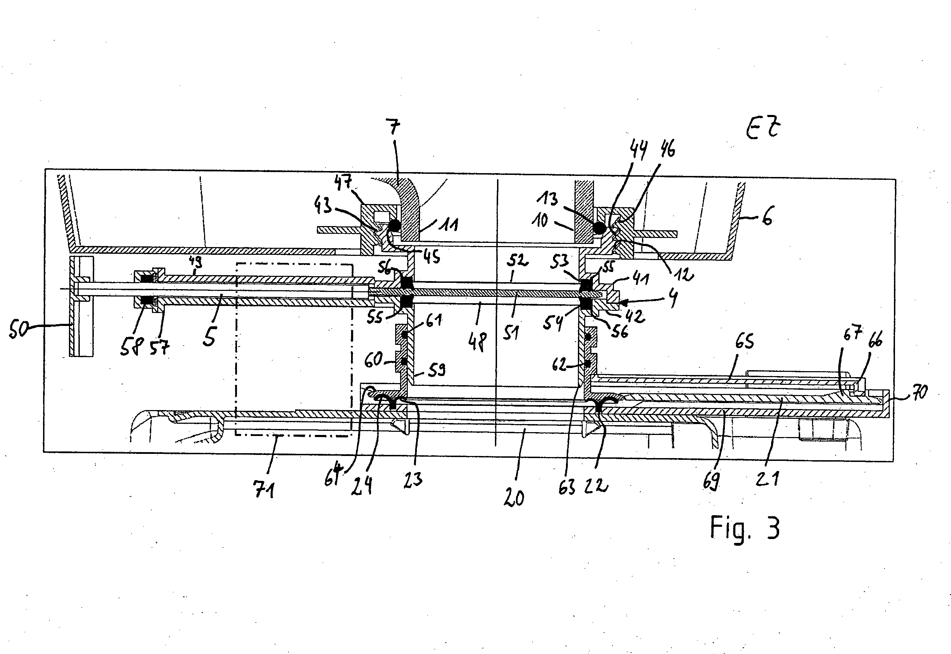

Das Durchleitteil 4 ist insbesondere in Fig. 3 im Detail dargestellt. Das Durchleitteil 4 umfasst ein Durchleitteiloberteil 41 und ein Durchleitteilunterteil 42, die beide formschlüssig miteinander verbunden sind. Das Durchleitteiloberteil 41 weist an einem oberen Ende 43 einen Gewindeabschnitt 44 für das Oberteil 2 der Toilette 1 und einen Dichtsitz 45 für die Ringdichtung 13 zwischen dem Durchleitteiloberteil 41 und der Toilettenschüssel 7 auf. Der Gewindeabschnitt 44 greift in einen Gegengewindeabschnitt 46 eines Zwischenteils 47 des Oberteils 2 ein. Zwischen dem Durchleitteiloberteil 41 und dem Durchleitteilunterteil 42 ist eine Führung 48 und ein Schieberschwertgehäuse 49 für den Durchleitteilverschluss 5 ausgebildet. Über einen Schiebergriff 50 ist ein Schieberschwert 51 im Schieberschwertgehäuse 49 und der Führung 48 verlagerbar. Das Schieberschwert 51 ist in einem Durchleitbereich 52 jeweils gegenüber dem Durchleitteiloberteil 41 und dem Durchleitteilunterteil 42 durch zwei Ringdichtungen 53, 54 abgedichtet. Die Ringdichtungen 53, 54 weisen Stege 55 auf, die in Nuten 56 im Durchleitteiloberteil 41 und im Durchleitteilunterteil 42 eingreifen. An einem freien Ende 57 des Schieberschwertgehäuses 49 ist eine weitere Dichtung 58 vorgesehen, um das Schieberschwertgehäuse 49 gegen den Austritt von Flüssigkeiten und Feststoffen, insbesondere Fäkalien, zu sichern. An einem unteren Ende 59 des Durchleitteilunterteils 42 ist ein Kassettenadapter 60 vorgesehen. Der Kassettenadapter 60 ist am Durchleitteilunterteil 42 axial verschiebbar angeordnet. Zwischen dem Durchleitteilunterteil 42 und dem Kassettenadapter 60 sind zwei Ringdichtungen 61, 62 vorgesehen. Der Kassettenadapter 60 weist an einem unteren Ende 63 einen Flansch 64 auf, an dem die Kassettendichtung 22 im eingeschobenen Zustand EZ der Kassette 15 zur Anlage gelangt. Seitlich ist am Kassettenadapter 60 ein Mitnehmer 65 für eine Einlassabdeckung 21 der Kassette 15 vorgesehen. Wird die Kassette 15 in den Kassettenschacht eingeschoben, so greift ein Halteabschnitt 66 des Mitnehmers 65 formschlüssig in eine Rastnase 67 in der Einlassabdeckung ein und zieht die Einlassabdeckung 21 von der Einlassöffnung 20 in Richtung Entleerungsstutzen 18. Der Mitnehmer 65 ist von einer Rückholfeder beaufschlagt. Die Einlassabdeckung 21 ist kassettenseitig in einer Abdeckungsführung 69 gehalten. Die Abdeckungsführung 69 weist endseitig einen Randsteg 70 auf, der einen Anschlag für die Einlassabdeckung 21 bildet. Im eingeschobenen Zustand EZ der Kassette 15 ist die Einlassabdeckung 21 zwischen dem Randsteg 70 und dem Kassettenadapter 60 fixiert.

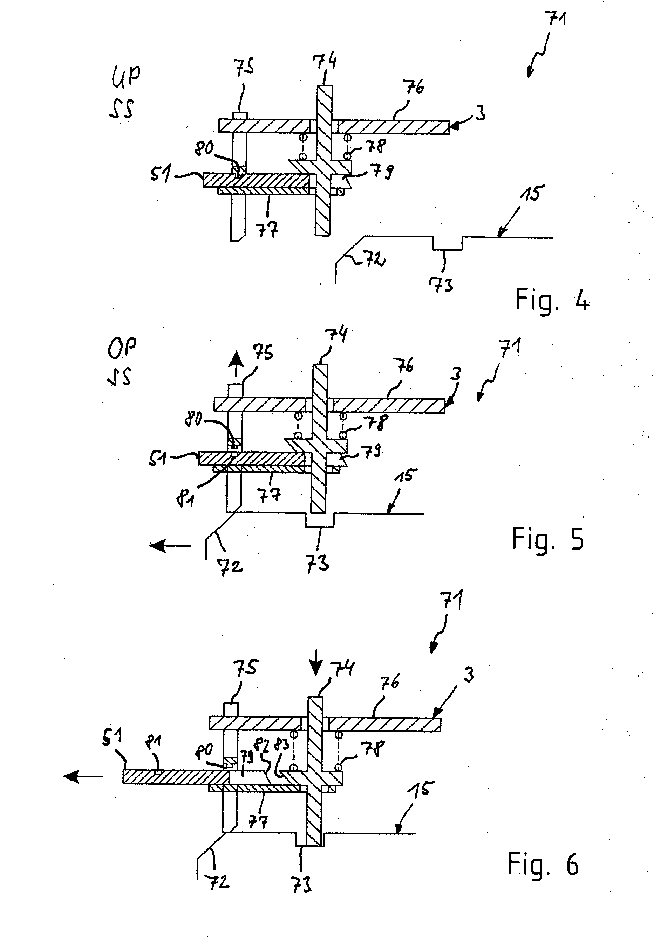

Zwischen Schieberschwert 51 und Kassette 15 ist ein Sperrmechanismus 71 vorgesehen, der in Fig. 3 durch ein strichpunktiertes Rechteck angedeutet und in den Fig. 4 bis 6 skizzenhaft dargestellt ist. Der Sperrmechanismus 71 koppelt das Schieberschwert 51 und die Kassette 15. An der Kassette 15 ist dazu eine Schrägfläche 72 und ein Rastabschnitt 73 vorgesehen. Der Sperrmechanismus 71 weist einen Kassettensperrbolzen 74 und einen Schieberschwertsperrbolzen 75 auf. Beide Sperrbolzen 74, 75 sind in Führungen 76, 77 des Trägerteils 3 geführt. Der Kassettensperrbolzen 74 ist von einer Feder 78 beaufschlagt. Das Schieberschwert 51 ist zur Aufnahme des Kassettensperrbolzens 74 endseitig mit einem Schlitz 79 versehen. Somit ist das Schieberschwert 51 an diesem geschlitzten Ende gabelförmig.

Der Sperrmechanismus 71 kann drei Zustände einnehmen, die in den Figuren 4 bis 6 einzeln dargestellt sind.

Im ersten Zustand, gezeigt in Fig. 4, ist die Kassette 15 nicht in den Kassettenschacht 14 eingeschoben. Der Schieberschwertsperrbolzen 75 ist deshalb in einer unteren Position UP, in der das Schieberschwert 51 gegen das Ausziehen aus einer Schließstellung SS gesperrt ist. Hierzu ist am Schieberschwertbolzen 75 ein Dorn 80 vorgesehen, der in eine Vertiefung 81 im Schieberschwert 51 eingreift. Dieser Zustand ist auch in den Fig. 7 und 8 dargestellt. Dort erkennt man, dass die Kassette 15 ausgezogen ist. Die Einlassabdeckung 21 deckt die Einlassöffnung 20 ab, so dass die Kassette 15 flüssigkeitsdicht verschlossen ist. Gleichzeitig ist das Schieberschwert 51 in der Schließstellung 55 fixiert, so dass Feststoffe und Flüssigkeiten nicht durch das Durchleitteil 4 fallen können, sondern auf dem Schieberschwert 51 liegen bleiben.

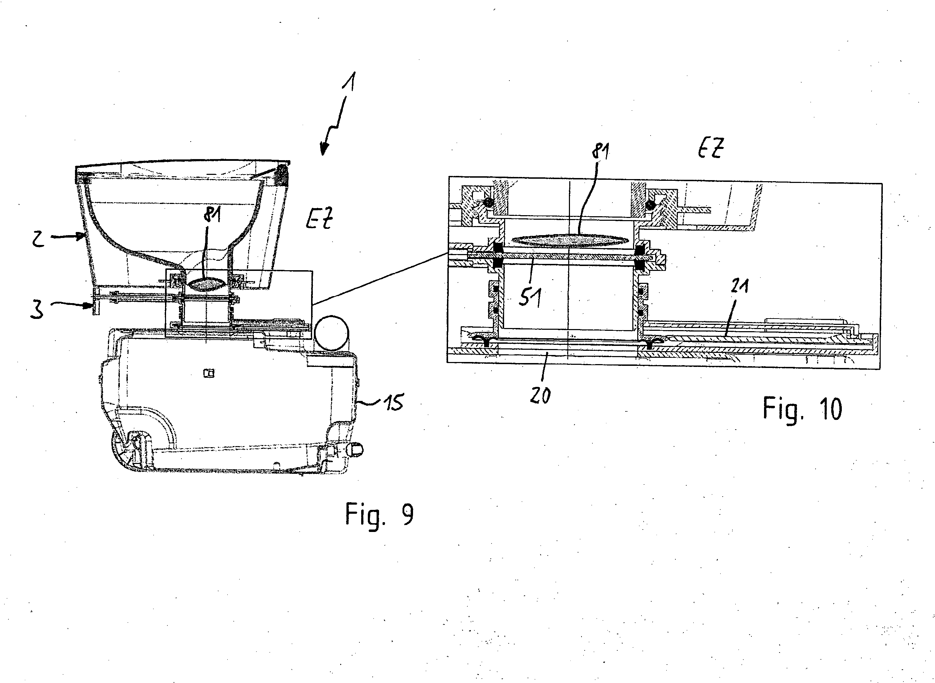

Im zweiten Zustand, gezeigt in Fig. 5, ist die Kassette 15 in den Kassettenschacht 14 eingeschoben. Der Kassettensperrbolzen 51 ist an der Schrägfläche 72 zur Anlage gelangt und ist nach oben in eine obere Position OP verschoben. Nach der Verlagerung greift der Dorn 80 des Schieberschwertbolzens 75 nicht mehr in das Schieberschwert 51 ein. Mithin ist das Schieberschwert 51 nicht mehr gesperrt. Das Schieberschwert 51 kann in diesem Zustand ausgezogen werden. Dieser Zustand ist auch in den Fig. 9 und 10 dargestellt. Darin ist die Kassette 15 vollständig in den Kassettenschacht 14 eingeschoben, so dass die Einlassabdeckung 21 in eine Offenstellung verschoben ist und die Einlassöffnung 20 offen ist. Das Schieberschwert 51 ist aber noch in der Schließstellung, so dass die auf dem Schieberschwert 51 liegenden Feststoffe 81 noch nicht in die Kassette 15 fallen konnten.

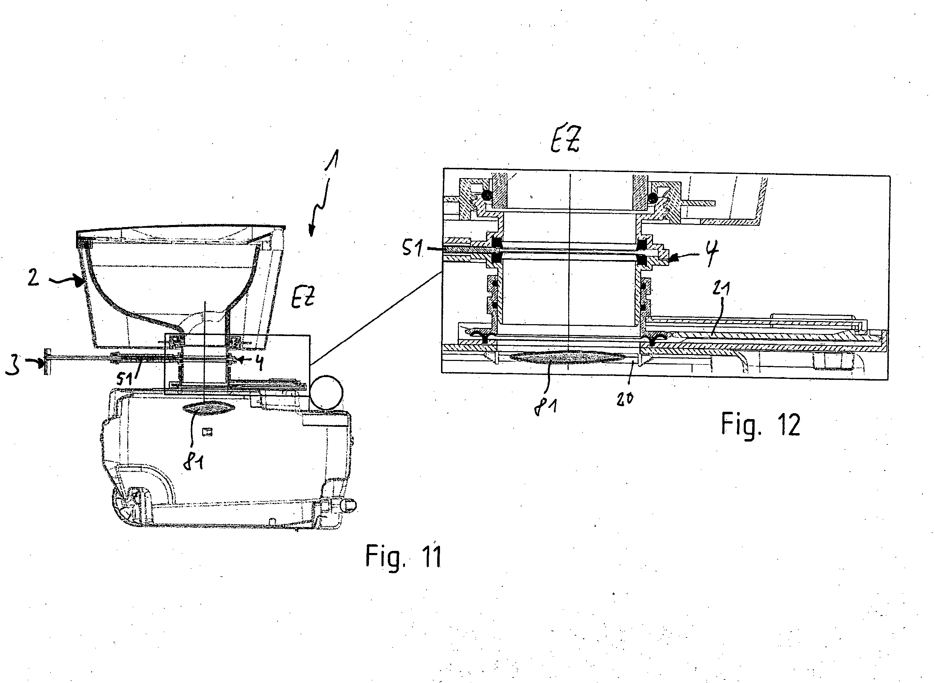

Der dritte und letzte Zustand ist in Fig. 6 gezeigt. Die Kassette 15 ist in den Kassettenschacht 14 eingeschoben und das Schieberschwert 51 ist nicht durch den Schieberschwertsperrbolzen 75 gesperrt. Das Schieberschwert 51 ist aus der Schließstellung SS gezogen. Das Ausziehen des Schieberschwerts 51 hat den Effekt, dass aufgrund von Schrägflächen 82, 83 an dem Schieberschwert 51 und dem Kassettensperrbolzen 74 und der Feder 78 der Kassettensperrbolzen 74 abgesenkt ist und in den Rastabschnitt 73 in der Kassette 15 eingreift. In diesem Zustand ist die Kassette 15 fixiert, d.h. gegen ein Ausziehen aus dem Kassettenschacht 14 gesichert. Dieser Zustand ist auch in den Fig. 11 und 12 gezeigt. Die Kassette 15 ist darin vollständig in den Kassettenschacht 14 eingeschoben. Die Einlassöffnung 20 ist offen. Das Schieberschwert 21 ist ausgezogen. Mithin können die Flüssigkeiten und Feststoffe 81 durch das Durchleitteil 4 geleitet werden und in die Kassette 15 fallen, da das Durchleitteil 4 und die Einlassöffnung 20 fluchten.

Der erste bis dritte Zustand werden nacheinander durchlaufen, um die Verschlüsse an der Kassette 15 und im Durchleitteil 4 nacheinander zu öffnen. Zum Schließen werden die Zustände in umgekehrter Reihenfolge durchlaufen. Auf diese Weise ist durch den Sperrmechanismus 71 sichergestellt, dass keine Flüssigkeiten und Feststoffe 81 durch das Durchleitteil 4 gelangen können, wenn keine Kassette 15 in den Kassettenschacht 14 eingeschoben ist. Weiterhin ist sichergestellt, dass bei geöffnetem Durchleitteilverschluss 5 die Kassette 15 nicht aus dem Kassettenschacht 14 herausgezogen werden kann.

### Bezugszeichen

- 1 -: Toilette
- 2 -: Oberteil
- 3 -: Trägerteil 4 - Durchleitteil
- 5 -: Durchleitteilverschluss
- 6 -: Gehäuse
- 7 -: Toilettenschüssel
- 8 -: Toilettenbrille
- 9 -: Toilettendeckel
- 10 -: unteres Ende von 7
- 11 -: Toilettenschüsselauslass
- 12 -: Gewinde
- 13 -: Ringdichtung
- 14 -: Kassettenschacht
- 15 -: Kassette
- 16 -: Rad
- 17 -: Griff
- 18 -: Entleerungsstutzen
- 19 -: Oberseite von 15
- 20 -: Einlassöffnung
- 21 -: Einlassabdeckung
- 22 -: Kassettendichtung
- 23 -: Dichtlippe
- 24 -: Dichtlippe
- 41 -: Durchleitteiloberteil
- 42 -: Durchleitteilunterteil
- 43 -: oberes Ende von 41
- 44 -: Gewindeabschnitt
- 45 -: Dichtsitz
- 46 -: Gegengewindeabschnitt
- 47 -: Zwischenteil
- 48 -: Führung
- 49 -: Schieberschwertgehäuse
- 50 -: Schiebergriff
- 51 -: Schieberschwert
- 52 -: Durchleitbereich
- 53 -: Ringdichtung
- 54 -: Ringdichtung
- 55 -: Steg
- 56 -: Nut
- 57 -: freies Ende von Schieberschwertgehäuse
- 58 -: Dichtung
- 59 -: unteres Ende von 42
- 60 -: Kassettenadapter
- 61 -: Ringdichtung
- 62 -: Ringdichtung
- 63 -: unteres Ende von 60
- 64 -: Flansch
- 65 -: Mitnehmer
- 66 -: Haltabschnitt
- 67 -: Rastnase
- 69 -: Abdeckungsführung
- 70 -: Randsteg
- 71 -: Sperrmechanismus
- 72 -: Schrägfläche
- 73 -: Rastabschnitt
- 74 -: Kassettensperrbolzen
- 75 -: Schieberschwertsperrbolzen
- 76 -: Führung
- 77 -: Führung
- 78 -: Feder
- 79 -: Schlitz
- 80 -: Dorn
- 81 -: Feststoff
- 82 -: Schrägfläche
- 83 -: Schrägfläche
- EZ -: eingeschobener Zustand
- AZ -: ausgezogener Zustand
- OP -: obere Position von 75
- UP -: untere Position von 75
- SS -: Schließstellung

## Patentansprüche

1. Toilette für Fahrzeuge, insbesondere für Busse, Reisemobile, Caravans oder Yachten, die ein Oberteil (2) mit einer Toilettenschüssel (7), ein Trägerteil (3) mit einem Kassettenschacht (14) und eine Kassette (15) mit einer Einlassöffnung (20) und einer Einlassabdeckung (21) aufweist, wobei die Kassette (15) in den Kassettenschacht (14) einschiebbar ist, wobei zwischen der Toilettenschüssel (7) und der im eingeschobenen Zustand (EZ) befindlichen Kassette (15) ein Durchleitteil (4) mit einem Durchleitteilverschluss (5) angeordnet ist, wobei das Durchleitteil (4) durch den Durchleitteilverschluss (5) verschließbar ist, wobei der Durchleitteilverschluss (5) einen Sperrmechanismus (71) aufweist, wobei der Sperrmechanismus (71) mit der Kassette (15) gekoppelt wird, wenn die Kassette (15) eingeschoben wird, **dadurch gekennzeichnet, dass** der Sperrmechanismus (71) derart ausgebildet ist, dass die Kassette (15) im eingeschobenen Zustand (EZ) fixiert ist, wenn der Durchleitteilverschluss (5) außerhalb der Schließstellung ist..

2. Toilette nach Anspruch 1, **dadurch gekennzeichnet, dass** der Sperrmechanismus (71) derart ausgebildet ist, dass der Durchleitteilverschluss (5) nur dann aus einer Schließstellung bewegbar ist, wenn sich die Kassette (15) im eingeschobenen Zustand (EZ) befindet.

3. Toilette nach einem der Ansprüche 1 oder 2, **dadurch gekennzeichnet, dass** die Einlassabdeckung (21) an der Kassette (15) durch Einschieben der Kassette (15) in den Kassettenschacht (14) automatisch öffenbar und durch Herausziehen der Kassette (15) aus dem Kassettenschacht (14) verschließbar ist.

4. Toilette nach einem der Ansprüche 1 bis 3, **dadurch gekennzeichnet, dass** der Durchleitteilverschluss (5) ein Schieberschwert (51) und einen Schiebergriff (50) umfasst.

5. Toilette nach Anspruch 4, **dadurch gekennzeichnet, dass** das Durchleitteil (4) gegenüber dem in der Schließstellung befindlichen Schieberschwert (51) durch eine Dichtung (53, 54) abgedichtet ist.

6. Toilette nach Anspruch 4 oder 5, **dadurch gekennzeichnet, dass** das Durchleitteil (4) ein Schieberschwertgehäuse (49) aufweist.

7. Toilette nach einem der Ansprüche 1 bis 3, dadurchgekennzeichnet, dass der Durchleitteilverschluss (5) eine Klappe umfasst, wobei die Klappe vorzugsweise abschnittsweise sphärisch geformt ist.

8. Toilette nach einem der Ansprüche 1 bis 7, **dadurch gekennzeichnet, dass** die Töiletten-Schüssel (7) und das Durchleitteil (4) ein einstückiges Bauteil sind.

9. Toilette nach einem der Ansprüche 1 bis 8, **dadurch gekennzeichnet, dass** am Durchleitteil (4) ein Kassettenadapter (60) angeordnet ist.

10. Toilette nach Anspruch 9, **dadurch gekennzeichnet, dass** der Kassettenadapter (60) verschiebbar am Durchleitteil (4) angeordnet ist und zwischen dem Kassettenadapter (60) und dem Durchleitteil (4) eine Dichtung (61, 62) vorgesehen ist.

11. Toilette einem der Ansprüche 1 bis 10, **dadurch gekennzeichnet, dass** der Kassettenadapter (60) einen Mitnehmer (65) für die verschiebbare Einlassabdeckung (21) der Kassette (15) aufweist.

12. Toilette nach Anspruch 11, **dadurch gekennzeichnet, dass** der Mitnehmer (65) durch eine Rückholfeder beaufschlagt ist.

13. Toilette nach einem der Ansprüche 1 bis 12, **dadurch gekennzeichnet, dass** im eingeschobenen Zustand (EZ) der Kassette (15) das Durchleitteil (4) und eine Einlassöffnung (20) der Kassette (15) fluchten.

14. Toilette nach einem der Ansprüche 1 bis 13, **dadurch gekennzeichnet, dass** die Kassette (15) in den Kassettenschacht (14) eingeschoben ist.

## Claims

1. A toilet for vehicles, particularly for buses, motor homes, caravans or yachts, which includes an upper portion (2) with a toilet bowl (7), a support portion (3) with a box shaft (14) and a box (15) with an inlet opening (20) and an inlet cover (21), wherein the box (15) may be slid into the box shaft (14), whereby arranged between the toilet bowl (7) and the box (15) situated in the inserted state (EZ) there is a passage portion (4) with a passage portion valve (5), wherein the passage portion (4) is closable by the passage portion valve (5), wherein the passage portion valve (5) includes a blocking mechanism (71), wherein the blocking mechanism (71) is coupled to the box (15), when the box (15) is inserted, **characterised in that** the blocking mechanism (71) is so constructed that the box (15) is fixed in position in the inserted state (EZ) when the passage portion valve (5) is out of the closed position.

2. A toilet as claimed in Claim 1, **characterised in that** the blocking mechanism (71) is so constructed that the passage portion valve (5) is only movable out of a closed position when the box (15) is located in the inserted state (EZ).

3. A toilet as claimed in one of Claims 1 or 2, **characterised in that** the inlet cover (21) on the box (15) is automatically openable by sliding the box (15) into the box shaft (14) and closable by removing the box (15) out of the box shaft (14).

4. A toilet as claimed in one of Claims 1 to 3, **characterised in that** the passage portion valve (5) has a slider tongue (51) and a slider handle (50).

5. A toilet as claimed in Claim 4, **characterised in that** the passage portion (4) is sealed with respect to the slider tongue (51) located in the closed position by a seal (53, 54).

6. A toilet as claimed in Claim 4 or 5, **characterised in that** the passage portion (4) includes a slider tongue housing (49).

7. A toilet as claimed in one of Claims 1 to 3, **characterised in that** the passage portion valve (5) includes a flap, wherein the flap is preferably of spherical shape in sections.

8. A toilet as claimed in one of Claims 1 to 7, **characterised in that** the toilet bowl (7) and the passage portion (4) are an integral component.

9. A toilet as claimed in one of Claims 1 to 8, **characterised in that** a box adapter (60) is arranged on the passage portion (4).

10. A toilet as claimed in Claim 9, **characterised in that** the box adapter (60) is movably arranged on the passage portion (4) and a seal (61, 62) is provided between the box adapter (60) and the passage portion (4).

11. A toilet as claimed in one of Claims 1 to 10, **characterised in that** the box adapter (60) includes a carrier (65) for the movable inlet cover (21) of the box (15).

12. A toilet as claimed in Claim 11, **characterised in that** the carrier (65) is acted on by a return spring.

13. A toilet as claimed in one of Claims 1 to 12, **characterised in that**, in the inserted state (EZ) of the box (15), the passage portion (4) and an inlet opening (20) of the box (15) are in alignment.

14. A toilet as claimed in one of Claims 1 to 13, **characterised in that** the box (15) is slid into the box shaft (14).

## Revendications

1. Toilettes pour véhicules, en particulier pour autocars, camping-cars, caravanes ou yachts, comportant une partie supérieure (2) avec une cuvette (7), une partie support (3) avec une cuve à cassette (14) et une cassette (15) avec une ouverture d'entrée (20) et un couvercle d'entrée (21), la cassette (15) est insérée dans la cuve à cassette (14), une partie de passage (4) avec un couvercle (5) est disposée entre la cuvette (7) des toilettes et la cassette (15) en position insérée (EZ), la partie de passage (4) pouvant être fermée par le couvercle (5), le couvercle (5) de la partie de passage comportant un mécanisme de verrouillage (71), ledit mécanisme de verrouillage (71) étant couplé à la cassette (15) lorsque la cassette (15) est insérée, **caractérisées en ce que** le mécanisme de verrouillage (71) est configuré de telle sorte que la cassette (15) est immobilisée en position insérée (EZ) lorsque le couvercle (5) de la partie de passage est hors de la position de fermeture.

2. Toilettes selon la revendication 1, **caractérisées en ce que** le mécanisme de verrouillage (71) est configuré de telle sorte que le couvercle (5) de la partie de passage peut être déplacé hors d'une position de fermeture uniquement lorsque la cassette (15) est située dans la position insérée (EZ).

3. Toilettes selon la revendication 1 ou 2, **caractérisées en ce que** le couvercle d'entrée (21) sur la cassette (15) peut s'ouvrir automatiquement par l'insertion de la cassette (15) dans la cuve à cassette (14) et peut se fermer sous l'effet de l'extraction de la cassette (15) hors de la cuve à cassette (14).

4. Toilettes selon l'une quelconque des revendications 1 à 3, **caractérisées en ce que** le couvercle (5) de la partie de passage comporte une barre coulissante (51) et une poignée (50).

5. Toilettes selon la revendication 4, **caractérisées en ce qu'**une garniture d'étanchéité (53, 54) assure l'étanchéité de la partie de passage (4) par rapport à la barre coulissante (51) en position de fermeture.

6. Toilettes selon la revendication 4 ou 5, **caractérisées en ce que** la partie de passage (4) comporte un boîtier (49) pour la barre coulissante.

7. Toilettes selon l'une quelconque des revendications 1 à 3, **caractérisées en ce que** le couvercle (5) de la partie de passage comporte un clapet, ledit clapet ayant, de préférence par zones, une forme sphérique.

8. Toilettes selon l'une quelconque des revendications 1 à 7, **caractérisées en ce que** la cuvette (7) et la partie de passage (4) constituent une pièce d'un seul tenant.

9. Toilettes selon l'une quelconque des revendications 1 à 8, **caractérisées en ce qu'**un adaptateur de cassette (60) est disposé sur la partie de passage (4).

10. Toilettes selon la revendication 9, **caractérisées en ce que** l'adaptateur de cassette (60) est disposé de manière mobile sur la partie de passage (4), et une garniture d'étanchéité (61, 62) est prévue entre l'adaptateur de cassette (60) et la partie de passage (4).

11. Toilettes selon l'une quelconque des revendications 1 à 10, **caractérisées en ce que** l'adaptateur de cassette (60) comporte un élément d'entraînement (65) pour le couvercle d'entrée (21) mobile de la cassette (15).

12. Toilettes selon la revendication 11, **caractérisées en ce que** l'élément d'entraînement (65) est sollicité par un ressort de rappel.

13. Toilettes selon l'une quelconque des revendications 1 à 12, **caractérisées en ce que** dans la position insérée (EZ) de la cassette (15), la partie de passage (4) et une ouverture d'entrée (20) de la cassette (15) sont alignées.

14. Toilettes selon l'une quelconque des revendications 1 à 13, **caractérisées en ce que** la cassette (15) est insérée dans la cuve à cassette (14).
